# EUROPÄISCHE PATENTSCHRIFT

(11) **EP 0 499 806 B1**
(45) Veröffentlichungstag und Bekanntmachung des Hinweises auf die Patenterteilung: **23.03.1994**
(21) Anmeldenummer: 92100919.7
(22) Anmeldetag: 21.01.1992
(51) Int. Cl.: F03B 15/14

(54) **Turbinenanlage**
Hydro-electric plant
Installation hydro-électrique

(30) Priorität: 16.02.1991 DE 4104797
(43) Veröffentlichungstag der Anmeldung: 26.08.1992
(73) Patentinhaber: KSB Aktiengesellschaft, 67227 Frankenthal (DE)
(72) Erfinder: Görisch, Armin, W-6521 Offstein (DE); Mayer, Walter, W-6700 Ludwigshafen (DE)

(56) Entgegenhaltungen:
- EP-A- 0 174 287
- DE-A- 3 324 326
- GB-A- 400 394

## Beschreibung

Die Erfindung betrifft eine Turbinenanlage gemäß dem Oberbegriff des Hauptanspruches.

Eine derartige Turbinenanlage ist z.B. aus DE-A-33 24 326 bekannt.

Um in Fabriken, Anlagen und dgl. eine günstige Energiebilanz zu erhalten, finden mittlerweile in Rohrleitungssystemen häufig Pumpen Anwendung, die im Rückwärtslauf als Turbine betrieben werden, um somit vorhandene Druckenergie nutzbar zu machen. Es ist kostengünstiger, hierfür eine Kreiselpumpe zu benutzen, da diese in großen Stückzahlen produziert werden kann, als eine für den jeweiligen Anwendungsfall speziell ausgelegte Turbine zu verwenden. Der Antriebsmotor der Kreiselpumpe funktioniert dann als Generator, der seinen Strom in das bestehende Netz einspeist oder die als Turbine betriebene Kreiselpumpe treibt direkt eine Arbeitsmaschine an. Bei Rohrleitungssystemen kann dies in einfacher Weise durch ein Zwischenschalten einer Kreiselpumpe üblicher Bauart erfolgen. Zum An- und Abfahren der Pumpe sind Absperrarmaturen und Bremseinrichtungen anbringbar. Letztere verhindern bei einem plötzlichen Lastabwurf des Generators das Durchdrehen des Turbinenaggregates.

Schwieriger wird dies jedoch bei offenen Systemen, bei denen sich beispielsweise in einem Sammelbecken größere Wassermengen auf einem höheren Niveau ansammeln. Dies kann bei Kläranlagen, kleinen Stauwerken und dgl. der Fall sein. Hier ist es bekannt, zwischen höherem Niveau, dem sog. Oberwasser, und niedrigerem Niveau, dem sog. Unterwasser, eine Rohrleitung vorzusehen, bei der im Bereich des Unterwassers eine Tauchmotorpumpe installiert ist. Für die letztere können die bekannten Bauarten Anwendung finden. Die Rohrleitung zwischen Ober- und Unterwasser wird als Heberrohr ausgebildet, um eine Regelungsmöglichkeit für das Turbinenaggregat zu erhalten. Ein Evakuieren des Heberrohres ermöglicht den Zutritt vom Oberwasser in das Heberrohr und damit zum Turbinenaggregat. Durch Belüften des Heberrohres kann in einfachster Weise ein Abschalten des Turbinenaggregates erreicht werden.

Diese Bauart einer Turbinenanlage weist jedoch den Nachteil auf, daß sie mit wartungsintensiven Hilfsaggregaten versehen ist, welche bei nicht ordnungsgemäßer Wartung den Betrieb der gesamten Anlage gefährden können. Ferner ist der Bauaufwand größer, da bei einem Turbinenausfall und/oder einem Überschuß an Wasser eine entsprechend große Abflußmöglichkeit aus dem Sammelbecken geschaffen werden muß.

Der Erfindung liegt die Aufgabe zugrunde, eine Turbinenanlage zu entwickeln, welche bei einfachstem Aufbau einen automatischen Betrieb mit selbsttätigem Ein- und Ausschalten ermöglicht.

Die Lösung dieser Aufgabe erfolgt gemäß dem kennzeichnenden Teil des Hauptanspruches. Durch die Schächte, die eine zur Atmosphäre hin offen ausgebildete Schachtöffnung aufweisen, kann auf die wartungsintensiven und aufwendigen Evakuierungseinrichtungen der bisherigen Heberleitungen völlig verzichtet werden. Des weiteren ist auch keine aufwendige Kontrolle der Dichtheit der Heberleitung erforderlich, da das im Sammelbecken befindliche Wasser dem Turbinenaggregat im freien Fall zuströmt. Da die Höhe des Wasserstandes oberhalb der Einlauföffnung proportional der Durchflußmenge durch das Turbinenaggregat ist, kann mit einem einfachen Wasserstandshöhenmeßgerät bestimmt werden, wann die Bremseinrichtung zu lösen und damit die Inbetriebnahme der Turbine zu veranlassen ist. Mit Hilfe einer einfachen Schalteinrichtung kann beim Vorhandensein von mehreren mit Turbinenaggregaten versehenen Rohrschächten bei zunehmenden Wasserzulauf und damit beim Anstieg des Wasserstandes im Einlaufbecken das/die nächstfolgende/n Turbinenaggregat/e zugeschaltet werden. In ebenso einfacher Weise ist bei einem Nachlassen des Wasserzulaufes und damit bei einem Absinken des Flüssigkeitsspiegels durch einfache Messung des Wasserstandes und entsprechender Betätigung der Bremseinrichtungen ein Abschalten der jeweiligen Turbinenaggregate möglich. Damit wird verhindert, daß bei einem zu geringen Wasserzulauf die Turbinendrehzahl zu gering wird, der Generator damit als Motor läuft und aus dem Netz Strom entnimmt. Je nach Art und Bauweise des Einlaufbeckens können die Zulauföffnungen der Schächte horizontal bis vertikal angeordnet sein. Entscheidend ist jedoch die Tatsache, daß die den Eintritt des Wassers regelnde Einlaufkante der Schächte auf unterschiedlichen Niveauhöhen angeordnet sind.

Die Anwendung findenden Laufräder mit einem n_{q} > 150 min ⁻¹, es handelt sich dabei um sogenannte Schnelläufer, ergeben steile Turbinenkennlinien. Dies ermöglicht die leichte Regelbarkeit der gesamten Anlage mit Hilfe der jeweils in einem Schacht angeordneten zuschaltbaren Turbinenaggregate.

Eine Ausgestaltung der Erfindung sieht vor, daß die den Flüssigkeitsstand messende Einrichtung und die Bremseinrichtungen mit einer elektrischen Schalteinrichtung verbunden sind. Diese Schalteinrichtung kann gleichzeitig die Leistungsregelung der Turbinenaggregate enthalten. Mit der den Flüssigkeitsstand messenden Einrichtung, bei der es sich um eine für derartige Zwecke bekannte Meßeinrichtung handeln kann, ist in einfachster Weise eine Inbetriebnahme bzw. ein Stillsetzen der Turbinenaggregate möglich. Desgleichen kann mit Hilfe der Schalt- und Bremseinrichtung der Synchronisationsvorgang zwischen Generatordrehzahl und Netzfrequenz gewährleistet werden.

Die einfachste Möglichkeit wäre, beim Lösen der Bremseinrichtung den Generator gleich oder etwas zeitverzögert mit dem Netz zu verbinden. Beim gleichzeitigen Verbund mit dem Netz stellt sich beim Hochlaufen der Turbine ein Motorbetrieb ein. Dies ist aber nur akzeptabel, wenn sichergestellt werden kann, daß dieser Betriebsbereich nur kurzfristig eintritt. Auch müßte das mit dem Generator zu verbindende Stromnetz solchen kurzfristigen Belastungen gewachsen sein. Diese können aber auch durch eine zeitverzögerte Zuschaltung reduziert werden. Ist die Hochlaufzeit der Turbine bis zum Erreichen der Synchrondrehzahl bekannt oder ermittelbar, dann wird durch eine zeitverzögerte Zuschaltung zum Netz der Einschaltstromstoß erheblich reduziert. Eine nahezu vollständige Vermeidung desselben ist möglich, wenn mit bekannten Meßgeräten die genaue Synchrondrehzahl des Turbinenaggregates ermittelt und bei deren Erreichen die Netzzuschaltung erfolgt.

Mit Hilfe der die Flüssigkeit oberhalb der Einlauföffnungen messenden Einrichtung wird nun gewährleistet, daß erst bei einem Flüssigkeitsanfall, welcher einen effektiven Turbinenbetrieb gewährleistet, die Bremseinrichtung löst und damit die Turbine in Betrieb setzt.

Eine weitere Ausgestaltung der Erfindung sieht vor, daß die Ebene der Einlauföffnungen horizontal, diagonal oder vertikal verläuft. Die Schächte, in denen die Turbinenaggregate angeordnet sind, sind frei durchströmbar und weisen keine Verschlußeinrichtungen auf. Bei senkrechtem Verlauf der Schachtöffnung kann durch einen Schachtaufsatz, der jederzeit leicht demontierbar ist und einen problemlosen Zugang zum Turbinenaggregat gewährt, bewirkt werden, daß bei beengten Platzverhältnissen ein störungsfreier Zulauf zu den Turbinenaggregaten möglich ist.

Eine andere Ausgestaltung der Erfindung sieht vor, daß die Bremseinrichtung als mechanische, elektrische oder elektronische Bauart oder als eine Kombination derselben ausgeführt ist. Somit kann der Bewegungszustand des Turbinenaggregates durch eine mechanische oder elektromechanische Bauart einer Bremseinrichtung beeinflußt werden. Diese ließe sich in einfacher Weise mit dem Turbinenaggregat verbinden. Desgleichen ist auch eine elektrische oder elektronische Bauart möglich, bei der z. B. mit Hilfe eines entsprechenden Widerstandes oder dgl. die Drehzahl des Turbinenaggregates beeinflußt werden kann.

Eine über eine vorgegebene Marke ansteigende Wassermenge bewirkt in einfachster Weise ein Zuschalten des Turbinenaggregates mit der nächst höheren Einlauföffnung. Die Höhe der Oberkanten der Einlauföffnungen sind dabei so gewählt, daß die nächsthöhere Einlaufkante eines Schachtes am oder oberhalb desjenigen Wasserstandes angeordnet ist, welcher dem wirtschaftlichen Durchsatz desjenigen Schachtes mit der nächst niedrigen Einlaufkante entspricht. In entsprechender Weise verhält es sich mit weiteren Schächten und darin angeordneten Turbinenaggregaten. Die Einlaufkante eines weiteren Schachtes liegt immer auf oder über dem Höhenniveau, auf dem der vorhergehende Schacht einen wirtschaftlichen Mengendurchsatz aufweist.

Ein Ausführungsbeispiel der Erfindung ist in den Zeichnungen dargestellt und wird im folgenden näher beschrieben. Es zeigen die
- Fig. 1 und 2: Schnitte durch eine Turbinenanlage und die
- Fig. 3: ein Diagramm der Leistungsdaten.

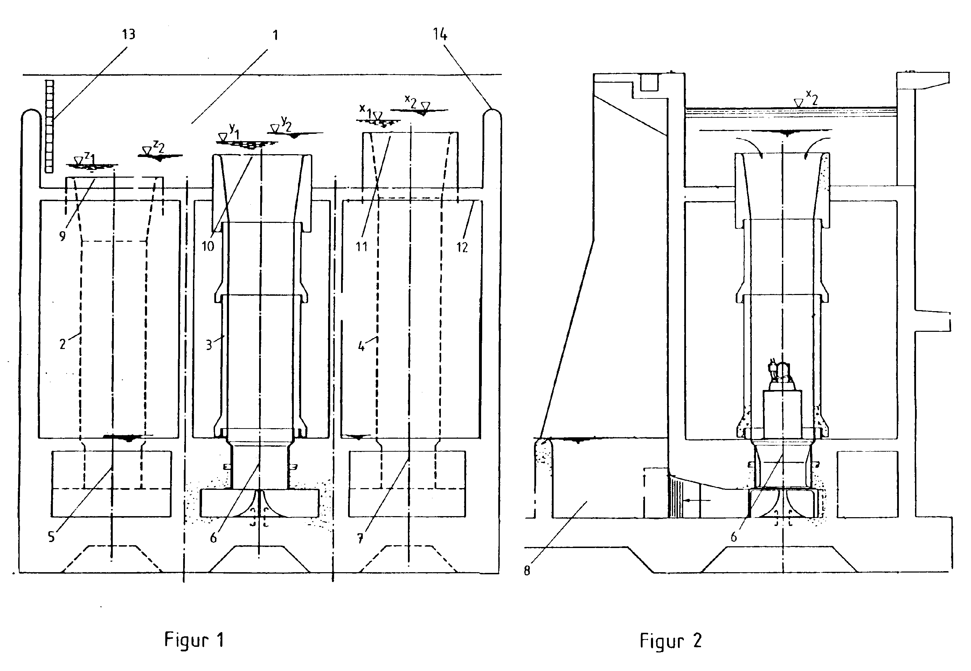

Die Fig. 1 zeigt einen Querschnitt durch ein Sammelbecken (1), auch Oberwasser genannt, mit darin mündenden Schächten (2-4) und in den Schächten befindlichen Turbinenaggregaten (5-7). In das Sammelbecken (1) strömt die Flüssigkeit ein, die einem niedrigeren Höhenniveau in einem Auslaufbecken (8), auch als Unterwasser bekannt, zugeführt werden soll. Auf dem Wege zwischen den beiden Becken soll der Flüssigkeit die Energie entzogen werden. Bei dem gezeigten Beispiel ragen die Einlauföffnungen (9-11) der Schächte (2-4) über den Boden (12) des Sammelbeckens (1) hinaus. Eventuell in der Flüssigkeit befindliche Schwebstoffe können sich somit am Boden (12) absetzen und strömen nicht durch die Turbinenaggregate.

Überschreitet der im Sammelbecken (1) sich einstellende Wasserstand die Mündung der Einlauföffnung (9), so fließt das Wasser durch den Schacht (2) ungehindert ab. Das mit einer - hier nicht näher dargestellten - Bremseinrichtung festgestellte Turbinenaggregat (5) spricht noch nicht an. Überschreitet der im Sammelbecken (1) sich einstellende Wasserstand ein Niveau Z₁ oberhalb der Einlauföffnung (9), dann entspricht dies einer Durchsatzmenge, bei der das Turbinenaggregat (5) Strom erzeugen kann. Ein auf die Höhe Z₁ des Wasserspiegels eingestellter Wasserstandsmesser (13) liefert dann ein Signal, welches zum Lösen der Bremseinrichtung des Turbinenaggregates (5) benutzt wird. Bei Erreichen des Wasserspiegels Z₂ gibt das Turbinenaggregat - je nach Auslegung - seine Nennleistung ab. Die Bremseinrichtung kann hierbei innerhalb oder außerhalb des bzw. der Turbinenaggregate angebracht werden. Auch ist es möglich, das Schaltsignal direkt oder über eine - hier nicht dargestellte - Schalteinrichtung der Bremseinrichtung zuzuführen.

Die Schalteinrichtung dient auch zur Verbindung oder zum Lösen des Generators mit oder vom Stromnetz. Entsprechend der Stabilität des Stromnetzes mit seinen angeschlossenen Verbrauchern und/oder des gewünschten Komforts kann ein anzufahrendes Turbinenaggregat sofort oder zeitverzögert mit dem Stromnetz verbunden werden.

Infolge der für die Turbinenaggregate Anwendung findenden Laufräder mit einer spezifischen Drehzahl n_{q} > 150 min⁻¹, ergibt sich eine steile Turbinenkennlinie. Da die Durchflußmenge durch den Schacht proportional zu der über der Einlauföffnung meßbaren Füllstandshöhe ist, kann in einfachster Weise der Schaltpunkt für eine Inbetriebnahme bei günstigen Betriebsverhältnissen ermittelt werden.

Mit Hilfe des Wasserstandsmessers (13) wird bei weiter steigendem Wasserstand eine Höhe Y₁ des Wasserspiegels ermittelt, die eine wirtschaftliche Inbetriebnahme eines weiteren Turbinenaggregates (6) durch Lösen von dessen Bremseinrichtung erlaubt. Kurz vorher wird sich ein Betriebszustand ergeben, bei dem durch den Schacht (3) und das stillstehende Turbinenaggregat Flüssigkeit abfließt. Erst wenn über der Eintrittsöffnung eine Füllstandshöhe Y₁ meßbar ist, die einer einen wirtschaftlichen Turbinenbetrieb gewährleistenden Durchflußmenge proportional ist, wird das Turbinenaggregat (6) freigegeben bzw. mit dem Netz verbunden.

In entsprechender Weise verhält es sich beim Schacht (4) mit dem darin angeordneten Turbinenaggregat (7). Bei weiter steigendem Zufluß in das Sammelbecken (1) und damit ansteigendem Wasserspiegel kann eine Füllstandshöhe X₁ erreicht werden, dessen Höhe sich oberhalb der Eintrittsöffnung des dritten Rohrschachtes einstellt, so daß mit Hilfe des Wasserstandsmessers (13) ein weiteres Signal zum Lösen der Bremseinrichtung des dritten Turbinenaggregates gegeben werden kann. Übersteigt das Flüssigkeitsniveau die Höhe X₂, so kann das Wasser ungehindert über die Begrenzung des Oberbeckens abfließen. Somit ist sichergestellt, daß die Turbinenaggregate nicht in einem unerlaubten Überlastbetrieb betrieben werden.

Wird die Durchsatzmenge in der Anlage durch irgendein Ergebnis geringer, so signalisiert der Wasserstandsmesser irgendwann eine Höhe, bei der die Durchflußmenge durch das Turbinenaggregat (7) so unwirtschaftlich ist, daß dies stillzusetzen ist. Dies geschieht durch ein Signal an die Brems- oder Schalteinrichtung, mit deren Hilfe das Turbinenaggregat vom Netz genommen und stillgesetzt wird. Der nicht mehr wirtschaftlich nutzbare Volumenstrom kann ungehindert den Rohrschacht (4) durchströmen und die Turbinenanlage benötigt keine Zusatzeinrichtungen, um einen Abfluß freizuschalten. In entsprechender Weise erfolgt dies bei den Turbinenaggregaten (6) und notfalls auch bei (5).

Der wesentliche Vorteil dieser Anlage besteht darin, daß durch einfache Messung des Wasserstandes und ein dadurch gegebenes Einschalt- bzw. Abschaltsignal die Turbinenaggregate für die Energierückgewinnung in einfachster Weise geschaltet werden können und daß der Bauaufwand gering ist, weil die Rohrschächte auch bei Stillstand der Turbinenaggregate ständig durchströmt werden können.

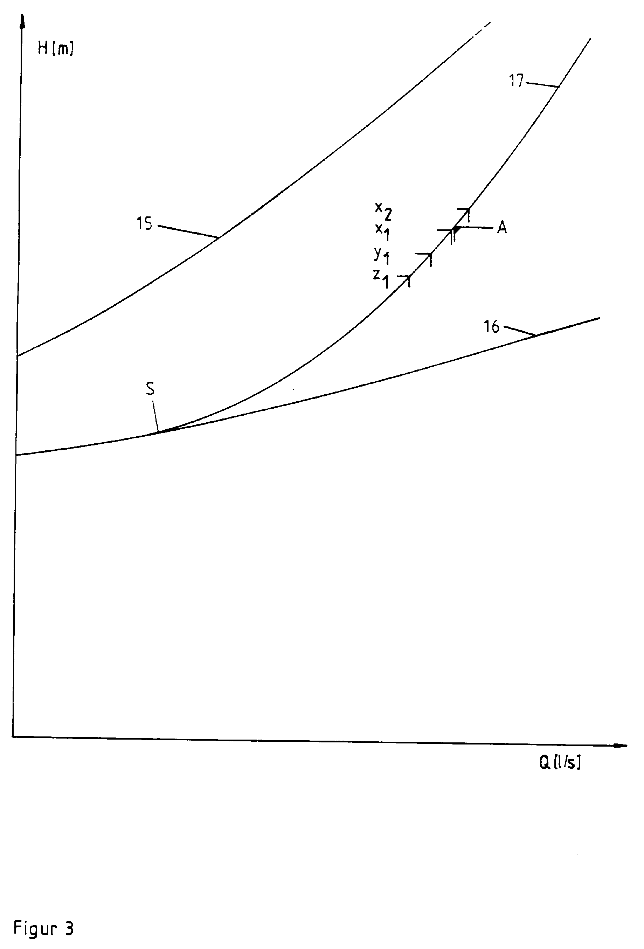

Die Fig. 2 zeigt einen Querschnitt durch die Anlage und den Schacht (3). Dieser verdeutlicht den Strömungsweg vom Oberwasser durch den Schacht (3) mit dem darin angeordneten Turbinenaggregat (6) zum nachgeordneten Auslaufbecken (8) oder auch Unterwasser. Es ist ohne weiteres möglich, anstelle der hier gezeigten waagerechten Einflußöffnung (10), einen schräg gestellten oder senkrecht angeordneten Eintrittsquerschnitt vorzusehen. Bei den von der Waagerechten abweichenden Eintrittsquerschnitten wird dann die unterste Kante des Eintrittsquerschnitt als Bezugsgröße für den Wasserstandsmesser benutzt. Eine derartige Bauart kann bei entsprechend beengten Raumverhältnissen von Vorteil sein. Anstelle der hier gezeigten, als Turbinen benutzten Tauchmotorpumpen kann auch jede andere Pumpenbauart mit einem Laufrad Anwendung finden, dessen spezifische Drehzahl n_{q} > 150 min⁻¹ ist. Pumpengehäuse und Antriebsmotor müssen nicht zwangsläufig innerhalb eines Gehäuses angeordnet sein, sondern es ist durchaus möglich, den Rohrschacht in eine Pumpenkammer einmünden zu lassen, in der nur ein von dem Fördermedium beaufschlagtes Laufrad angeordnet ist. Der dann von der Laufradwelle angetriebene Generator kann sich in Trockenaufstellung in einem separaten Raum befinden. Wesentlich ist, daß ein Turbinenaggregat mit steiler Kennlinie Anwendung findet, wie sie beispielsweise in der Fig.3 gezeigt ist. Eine Turbinenüberlastung wird durch den im Sammelbecken (1) vorhandenen Überlauf (14) vermieden, über den ein größer als der kalkulierte Wasseranfall, abfließen kann.

In dem in Fig. 3 gezeigten Diagramm ist auf der Abszisse die Durchsatzmenge Q in l/s aufgetragen. Die Ordinate entspricht der Fallhöhe H der Anlage in m. Hiervon geht die Kurve (15) aus, die der Widerstandskennlinie eines festgestellten bzw. festgebremsten Turbinenaggregates mit der Drehzahl = Null entspricht. Die Kurve (16) stellt die Leerlaufkennlinie des Turbinenaggregates ohne Lastaufnahme dar. Dies bedeutet, daß das Turbinenaggregat von Wasser durchströmt wird und entsprechend der Durchsatzmenge frei mitdreht. Der Generator ist in diesem Fall nicht mit dem Netz verbunden. Die Kurve (17) zeigt die Betriebskennlinie eines mit dem Netz verbundenen Turbinenaggregates bei konstanter Drehzahl bzw. Synchrondrehzahl.

Der auf der Kurve (17) eingetragene Punkt A entspricht dem Auslegepunkt eines Turbinenaggregates. Im Ausführungsbeispiel wurden gleiche Turbinenaggregate verwendet. Gemäß den jeweiligen Einsatzbedingungen, die abhängig sind von den jeweiligen Anlagen, können die Einschalthöhen und der Auslegepunkt entsprechend angepaßt werden. Die Schaltpunkte Z₁, Y₁ und X₁ wurden bereits bei den Fig. 1 und 2 beschrieben.

Der Punkt X₂ entspricht dem höchstmöglichen Wasserstand im Sammelbecken (1), der durch die Höhe des Überlaufes (14) definiert ist.

Der den Schnittpunkt der beiden Kurven (16, 17) darstellende Punkt S entspricht dem Synchronisationspunkt, ab dem das Turbinenaggregat mit konstanter Drehzahl betrieben wird und Leistung in das Stromnetz einspeist. Im Bereich zwischen der Ordinate und dem Punkt S würde das Turbinenaggregat als Motor laufen und aus dem Netz Strom entnehmen. Dies ist nur in den vorstehend beschriebenen Fällen zulässig. Üblicherweise erfolgt die Verbindung zwischen dem Generator und dem Netz im Punkt S, wenn die Synchrondrehzahl erreicht ist. Zur Feststellung dieses Punktes können bekannte Einrichtungen Verwendung finden.

## Patentansprüche

1. Turbinenanlage, wobei als Turbinen betriebene Kreiselpumpen, insbesondere Tauchmotorpumpen die Turbinenaggregate bilden, die Laufräder der Kreiselpumpen eine spezifische Drehzahl n_{q} > 150 min⁻¹ aufweisen und die Turbinenaggregate innerhalb eines ein Sammelbecken und ein Auslaufbecken verbindenden Leitungssystems angeordnet sind, **dadurch gekennzeichnet,**
- daß die Turbinenaggregate (5-7) in die Becken (1, 8) verbindenden Schächten (2-4) angeordnet sind,
- daß die im Sammelbecken (1) angeordneten Einlauföffnungen (9-11) der Schächte (2-4) unterschiedlich hoch angeordnet sind,
- daß die Turbinenaggregate (5-7) mit einer Bremseinrichtung versehen sind und
- daß eine den Flüssigkeitsstand oberhalb der Einlauföffnungen (9-11) messende Einrichtung (13) den Betrieb der Turbinenaggregate (5-7) steuert.

2. Turbinenanlage nach Anspruch 1, dadurch gekennzeichnet, daß die den Flüssigkeitsstand messende Einrichtung (13) und die Bremseinrichtungen mit einer elektrischen Schalteinrichtung verbunden sind.

3. Turbinenanlage nach den Ansprüchen 1 und 2, dadurch gekennzeichnet, daß die Ebene der Einlauföffnungen (9-11) horizontal, diagonal oder vertikal verläuft.

4. Turbinenanlage nach den Ansprüchen 1 bis 3, dadurch gekennzeichnet, daß die Bremseinrichtung als mechanische, elektrische oder elektronische Bauart oder als eine Kombination derselben ausgeführt ist.

## Claims

1. A turbine arrangement, in the case of which centrifugal pumps, more particularly submersible motor pumps, operated as turbines constitute the turbine assemblies, the impellers of the centrifugal pumps have a specific speed of rotation (n_{q}) > 150 min⁻¹ and the turbine assemblies are arranged within a pipe system connecting a collecting pool and a discharge pool, characterized in that
- that the turbine assemblies (5 - 7) are arranged in passages (2 - 4) connecting the pools (1 and 8) together,
- in that the intake openings (9 - 11) arranged in the collecting pools (1), of the passages (2 - 4) are arranged at different levels,
- in that the turbine assemblies (5 - 7) are provided with a brake device and
- in that a device (13) adapted to measure the liquid level above the intake openings (9 - 11) controls the operation of the turbine assemblies (5 - 7).

2. The turbine arrangement as claimed in claim 1, characterized in that the device (13) adapted to measure the liquid level and the brake device are connected with an electrical circuit device.

3. The turbine arrangement as claimed in claim 1 and claim 2, characterized in the plane of the intake openings (9 - 11) extends horizontally, diagonally or vertically.

4. The turbine arrangement as claimed in claims 1 through 3, characterized in that the brake device is designed in the form of a mechanical, electrical or electronic system or as combination of the same.

## Revendications

1. Installation de turbines dans laquelle des pompes centrifuges fonctionnant comme des turbines, en particulier des pompes à moteur submersible forment les agrégats de turbines, dans laquelle les roues des pompes centrifuges présentent une vitesse de rotation spécifique nₚ > 150 min ⁻¹ et les agrégats de turbines sont placés à l'intérieur d'un système de tuyaux reliant un bassin collecteur et un bassin de décharge, caractérisée en ce que
- les agrégats de turbines (5-7) sont placés dans des puits (2-4) reliant les bassins (1, 8),
- les ouvertures d'entrée (9-11) des puits (2-4) placées dans les bassins de collecte (1) sont situées à des hauteurs différentes,
- les agrégats de turbines (5-7) sont munis d'un dispositif de freinage et que
- un dispositif (13) qui mesure le niveau du liquide au-dessus des ouvertures d'entrée (9-11) commande le fonctionnement des agrégats de turbines (5-7).

2. Installation de turbines selon la revendication 1 caractérisée en ce que l'installation (13) qui mesure le niveau du liquide et les dispositifs de freinage sont reliés par un dispositif de commande électrique.

3. Installation de turbines selon les revendications 1 et 2 caractérisée en ce que le plan des ouvertures d'entrée (9-11) est horizontal, diagonal ou vertical.

4. Installation de turbines selon les revendications 1 à 3 caractérisée en ce que le dispositif de freinage est conçu comme une construction mécanique, électrique ou électronique ou comme une combinaison de celles-ci.
